# EUROPEAN PATENT APPLICATION

(11) **EP 0 905 940 A2**
(43) Date of publication of application: **31.03.1999**
(21) Application number: 98307681.1
(22) Date of filing: 22.09.1998
(51) Int. Cl.: H04L 1/24

(54) **Loopback testing using error vector analysis**

(30) Priority: 30.09.1997 US 940506
(71) Applicant: LUCENT TECHNOLOGIES INC., Murray Hill, New Jersey 07974-0636 (US)
(72) Inventor: Artaki, Michael, Furlong, PA 18925 (US); Heutmaker, Michael S., Trenton, NJ 08628 (US)
(74) Representative: Buckley, Christopher Simon Thirsk

(57) **Abstract**

A communication system includes a transmit path (325), a receive path (345) and a loopback structure (350). The loopback configuration utilizes an error vector analyzer (355) as a post-processor. The loopback test precludes the inclusion of the demodulator (335) in the loopback so that measurements can be taken even if the modulation formats of the transmit and receive paths are different. As a consequence, the error vector loopback test does not require external test mobiles for generating the proper modulation signal for the receive path. The error vector loopback test characterizes the RF performance of the transmit and receive paths in the base station and may include the A/D and D/A converters (320,340). The loopback test can be employed with internal built-in test processors or external test sets to provide generally complete RF analysis and evaluation.

## Description

### FIELD OF THE INVENTION

This invention relates to the field of communications and in particular, to loopback testing of communication systems utilizing error vector analysis.

### BACKGROUND OF THE INVENTION

The general purpose of a communication system is to transmit information from a source to a destination located some distance away. As a result, a communication system basically consists of a transmitter, a channel and a receiver. The transmitter and receiver utilize various modulation/demodulation techniques to vary some parameter of a carrier wave with the information signal in such a way that the spectrum of the modulated wave matches the bandwidth of the channel over which the information is communicated. Once modulated, the signal is transmitted over the channel to the receiver, which, as stated above, recreates the original signal from the modulated signal. Some of the more common modulation techniques are Frequency Modulation, Amplitude Modulation and Quaternary Phase Shift Keying. The communication systems also employ various multiple access techniques to efficiently utilize the available frequency allocations. Some of the more common multiple access techniques are Time Division Multiple Access ("TDMA") and Code Division Multiple Access ("CDMA").

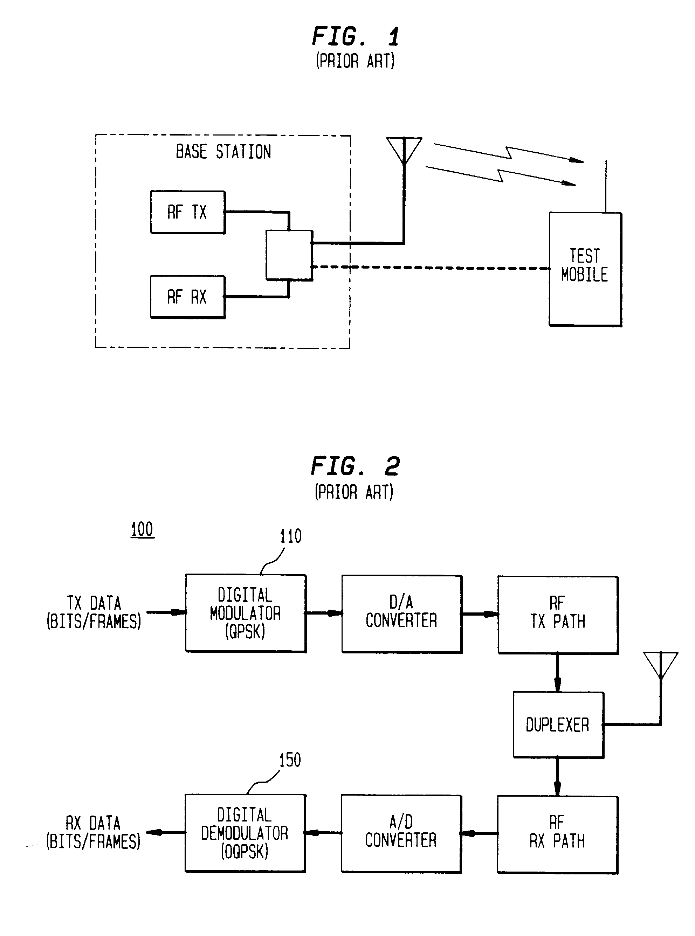

Communication systems typically include transceivers, which transmit information to and receive information from, other such communication systems. One method for simultaneously evaluating or characterizing the performance of the transmit and receive paths of a transceiver is to utilize a loopback test. Loopback tests test both transmitter and receiver paths by connecting the output of the transmitter to the input of the receiver. A drawback of conventional loopback tests is that they measure frame error rates, bit error rates or symbol error rates. For example, the bit error rate measures the percentage of received bits in error as compared to the total number of bits received. The tests provide limited information regarding the RF performance of the transmit and receive paths. A further disadvantage of the conventional loopback tests are that they require that the modulation and demodulation formats to be identical. Although this may be true in many communication systems, it is not true for the IS-95 CDMA based communication system. That is, in CDMA applications, the transmitter utilizes a different modulation format than that of the receiver. When the forward and reverse modulation formats differ, conventional loopback tests are not valid. Referring to FIG. 1, some prior art tests utilize test mobiles to perform loopback tests on CDMA based communication systems. The test mobiles are coupled either wireless or wired, and provide the proper signal to the transceiver receive path.

Accordingly, there is a need to provide an apparatus and method which permits greater RF characterization of transceivers and does not require the use of test mobiles.

### SUMMARY OF THE INVENTION

The present invention teaches a system, apparatus and method which provides greater information regarding the RF performance of the transmit and receive paths in communication systems by utilizing error vector analysis in a loopback test configuration. The error vector loopback test avoids the problem of different modulation formats by analyzing sampled modulation test data prior to digital demodulation. Importantly, the present method requires no test mobiles and provides greater flexibility in characterizing the performance of the transmit and receive paths.

In an exemplary embodiment of the present invention, a communication system includes a transmit path, a receive path and a loopback structure. The present loopback configuration advantageously utilizes an error vector analyzer as an output post-processor. By precluding the inclusion of the demodulator in the loopback, performance measurements can be taken even if the modulation formats of the transmit and receive paths are different. Consequently, the loopback structure does not require external test mobiles for generating the proper modulation signal for the receive path.

Advantageously, the system, apparatus and method of the present invention can be employed with on-board test systems to provide generally complete RF analysis and evaluation. The above factors make the present invention a versatile and efficient method for characterizing the RF performance of the transmit and receive paths of any type of communication system.

### BRIEF DESCRIPTION OF THE DRAWINGS

A more complete understanding of the present invention may be obtained from consideration of the following description in conjunction with the drawings in which:
FIG. 1 is a prior art testing configuration with utilizes a test mobile;
FIG. 2 is a conventional block diagram for a base station;
FIG. 3 is a conventional block diagram for a base station with a loopback test;
FIG. 4 is an exemplary embodiment of an error vector loopback test configuration in accordance with the present invention;
FIG. 5 is another exemplary embodiment of an error vector loopback test configuration in accordance with the present invention;
FIG. 6 is a detailed error vector loopback test configuration in accordance with the embodiment shown in FIG. 5;
FIG. 7(a), 7(b) and 7(c) are plots illustrating data from the configuration shown in FIG. 6;
FIG. 8(a), 8(b) and 8(c) are plots illustrating data from the configuration shown in FIG. 6;
FIG. 9(a), 9(b), 9(c) and 9(d) are expanded plots illustrating data from the configuration shown in FIG. 6;
FIG. 10 illustrates a schematic for error vector analysis as utilized in the present invention; and
FIG. illustrates the definition of the error vector in a graphical format.

### DETAILED DESCRIPTION

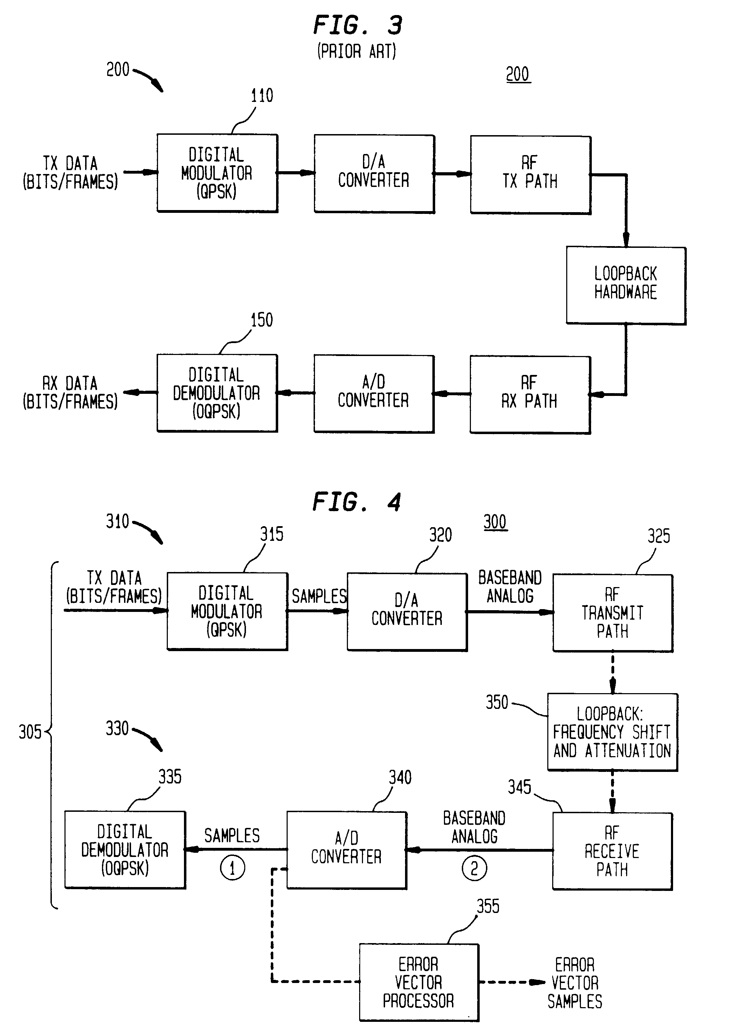

For clarity of explanation, the illustrative embodiment of the present invention is presented as comprising individual functional blocks (including functional blocks labeled as "processors"). The functions these blocks represent may be provided through the use of either shared or dedicated hardware, including, but not limited to, hardware capable of executing software. For example the functions of processors presented in Figures 4-6 may be provided by a single shared processor. (Use of the term "processor" should not be construed to refer exclusively to hardware capable of executing software.)

Illustrative embodiments may comprise microprocessor and/or digital signal processor ("DSP") hardware, read-only memory ("ROM") for storing software performing the operations discussed below, and random access memory ("RAM") for storing results. Very large scale integration ("VLSI") hardware embodiments, as well as custom VLSI circuitry in combination with a general purpose DSP circuit, may also be provided.

In general, the present invention utilizes an error vector analysis in a loop back test configuration which results in better RF characterization of the transmit and receive paths and eliminates the need for extemal test mobiles in communication systems having different forward and reverse modulation schemes. The error vector loopback test avoids the problem of different modulation formats by analyzing sampled modulation test data prior to digital demodulation. By precluding the inclusion of the demodulator in the loopback, the loopback structure does not require external components for generating the proper modulation signal for the receive path. As such, the present invention is employable with on-board test systems to provide generally complete RF analysis and evaluation.

Referring to FIGs. 2 and 3, there is illustrated a block diagram of a CDMA base station 100 utilized in wireless communications and in a conventional loopback test configuration 200. Conventional loopback tests measure bit error rates, frame error rates or symbol error rates by examining the data output from a digital demodulator 150. However, these tests are difficult to implement when the modulation format is different in the transmit and receive paths as is the case for CDMA based communication systerns. As shown in FIG. 2, the modulation scheme in the transmit path is QPSK and in the receive path it is OQPSK. Therefore, using a conventional loopback configuration, QPSK modulated data would be fed to a Offset QPSK ("OQPSK") demodulator. This, of course, is not a usable loopback test configuration.

Referring to FIG. 4, there is illustrated an exemplary embodiment of an error vector loopback test configuration 300 as utilized in a CDMA base station 305. Although a CDMA base station is utilized for discussion and example purposes, the present invention error vector loopback test can be employed in other communication systems. CDMA base station 305 includes a transmitter portion 310 and a receiver portion 330. Transmitter portion 310 includes a digital modulator 315, a D/A converter 320, and a RF transmit path 325. Receiver portion 330 includes a digital demodulator 335, a A/D converter 340, and a RF receive path 345. A loopback structure 350 couples a transmitter portion 310 to a receiver portion 330. In this exemplary embodiment, an error vector processor 355 is coupled either at access nodes 1 or 2, depending upon the analysis required, for outputting error vector samples. If error vector processor 355 is coupled at access node 1, the error vector analysis is based upon digitally sampled I,Q signals and if it is coupled at access node 2, then the error vector analysis utilizes baseband analog I,Q signals.

Implementation of error vector processor 355 can be achieved either internally with respect to base station 305 as a built-in data analyzer or by utilizing external test equipment. In an internal implementation, error vector processor 355 can be part of the digital signal processing used as built-in test equipment. In this mode, after the samples are acquired, they can be stored in memory and then later read out over a digital test interface designed into the device. Alternatively, only the results of the error vector analysis are read out. In an external implementation, samples are acquired by a logic analyzer at node 1 and then fed to an error vector analyzer for post-processing. If the samples are acquired at node 2, then the analog I,Q baseband samples are fed to a vector signal analyzer. As shown in FIG. 4, this latter configuration does not include A/D converter 340. The external configurations are applicable for design verification, hardware integration, and factory testing on the circuit and system levels. The internal configurations are particularly advantageous for base station field testing. Data can be read out and verified without the need to make extensive wired connections.

Operationally, the present invention obtains samples of the modulation prior to digital demodulator 335 and utilizes error vector analysis instead of measuring, for example, frame error rates at the output of digital demodulator 335. Sampled modulation is generally more useful in characterizing the RF performance of the transmit and receive paths. By utilizing sampled modulation in the test, the ability to test the analog/RF section separately from the digital section of the communication system is generally improved. Moreover, sampled modulation provides better diagnostic accuracy for circuits that fail a functional test. Use of the sampled modulation also allows flexibility in the analysis of test data. For example, it is generally faster and simpler to characterize a receiver by measuring the signal-to-noise ("SNR") in the I,Q samples than by measuring the frame error rate or symbol error rate. As detailed above and below, samples of the modulation can be acquired in a variety of ways and at a variety of places within the error vector loopback test configuration by using external test sets or internal digitizers and test interfaces.

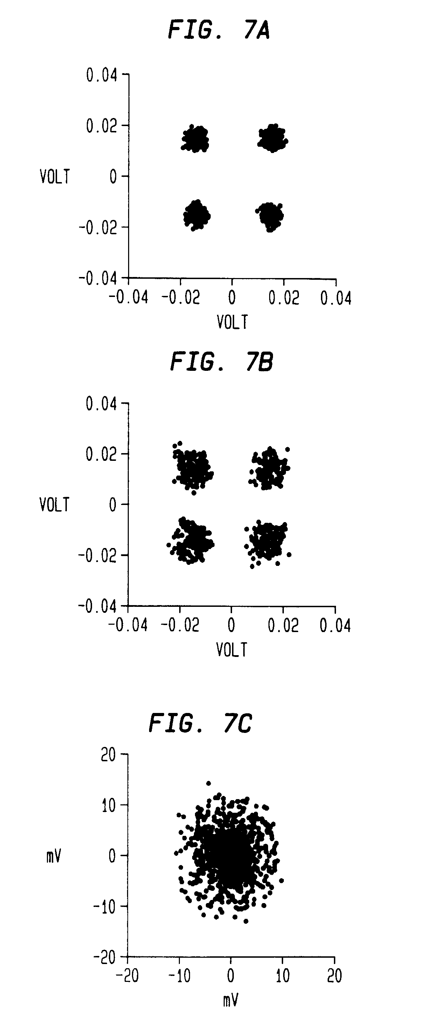

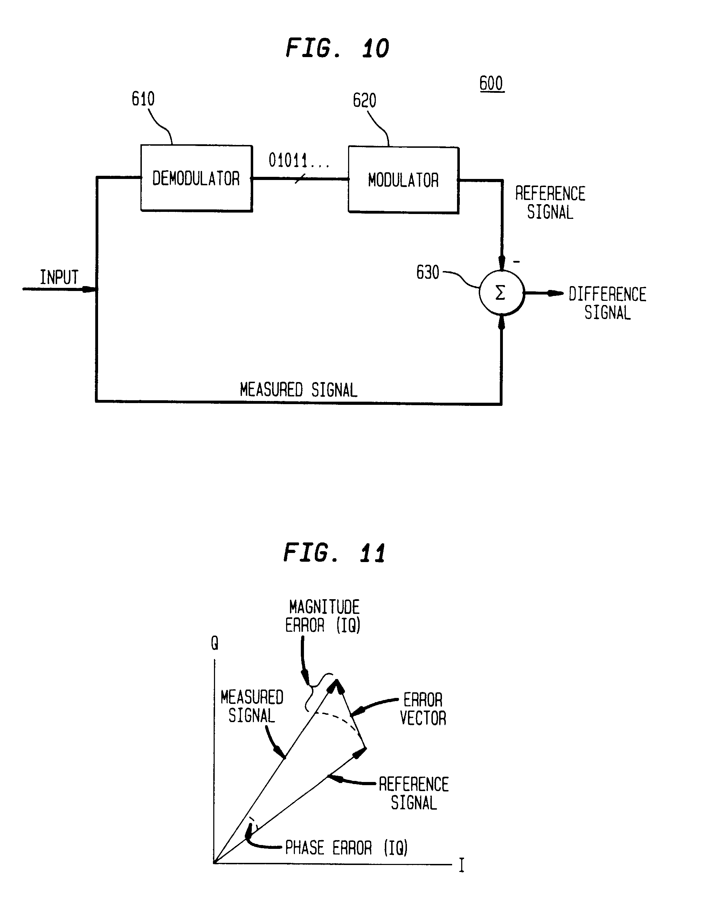

As stated above, the present invention performs an error vector analysis on the acquired modulation samples. In contrast to frame error rate analysis, error vector analysis can be performed on the modulated signal without the need of a digital demodulator. Error vector analysis is a generally understood measurement technique that is becoming increasingly common in the evaluation of communication systems. As such, only a top level summary is provided. Referring to FIG. 10, a block diagram is shown implementing an error vector analyzer 600. Error vector analyzer 600 includes a digital demodulator 610 and a mathematical representation of a perfect modulator 620. An input signal is fed to digital demodulator 610, the output of which is fed to perfect modulator 620. The final output is an ideal reference waveform. A summer 630 calculates a complex value which represents the difference between the measured waveform and the ideal waveform. Referring to FIG. 10, the resulting difference signal is representable in many different ways and can indicate various problems in the system. For example, the error vector can be expressed in magnitude only, it can be RMS averaged over a given time period, the error magnitude can be plotted versus symbol time, and the magnitude and phase components of the error vector can be compared to reveal phase noise as well as other errors. Moreover, the error vector can be transformed into the frequency domain for additional error analysis. The above represents only a few of the various error analysis that can be performed and isolated to a system problem. Some examples are shown below with reference to FIGs. 7(a)-7(c), 8(a)-8(c) and 9(a)-9(d).

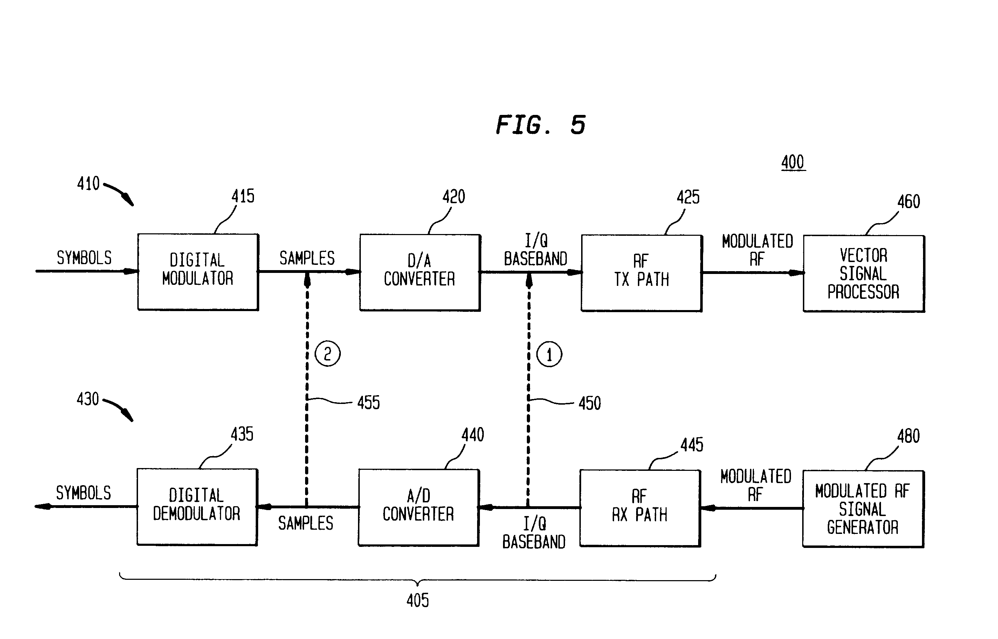

Referring now to FIG. 5, an alternate embodiment of an error vector loopback test configuration 400 is shown with respect to a CDMA base station 405. As before, CDMA base station 405 includes a transmitter portion 410 and a receiver portion 430. Transmitter portion 410 includes a digital modulator 415, a D/A converter 420, and a RF transmit path 425. Receiver portion 430 includes a digital demodulator 435, a A/D converter 440, and a RF receive path 445. A vector signal processor 460 is coupled to an output of transmitter portion 410, and specifically to the output of RF transmit path 425 and a modulated RF signal generator 480 is coupled to an input of receiver portion 430, and specifically to the input of RF receive path 445. At a first node, a loopback structure 450 couples an output of RF receive path 445 to an input of RF transmit path 425. In this mode, the RF paths are tested by inserting digitally modulated RF carrier test signals at an input of RF receive path 445, looping this I,Q baseband signal to the input of RF transmit path 425, and then measuring the error vector at the output of RF transmit path 425 utilizing vector signal analyzer 460. Alternatively, a loopback structure 455 at node 2 couples the output of A/D converter 440 to the input of D/A converter 420. This mode operates similarly to the previous mode, except that the testing includes the D/A converter and the A/D converter.

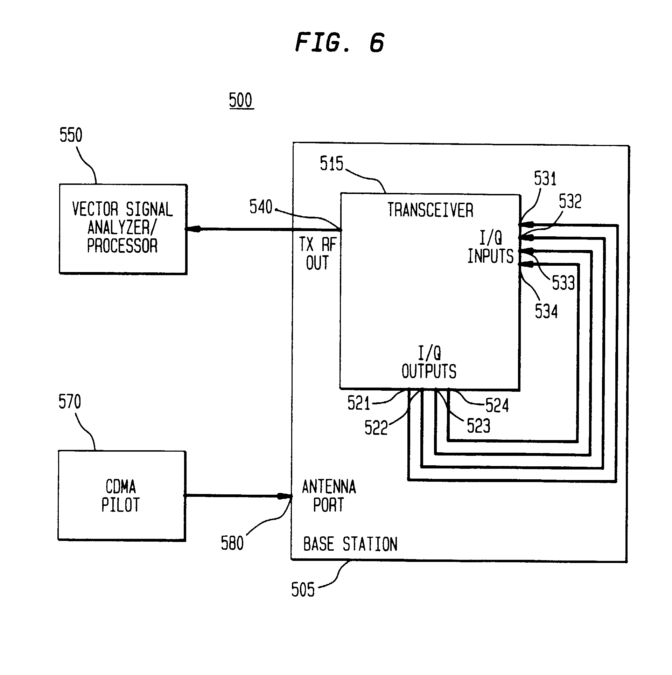

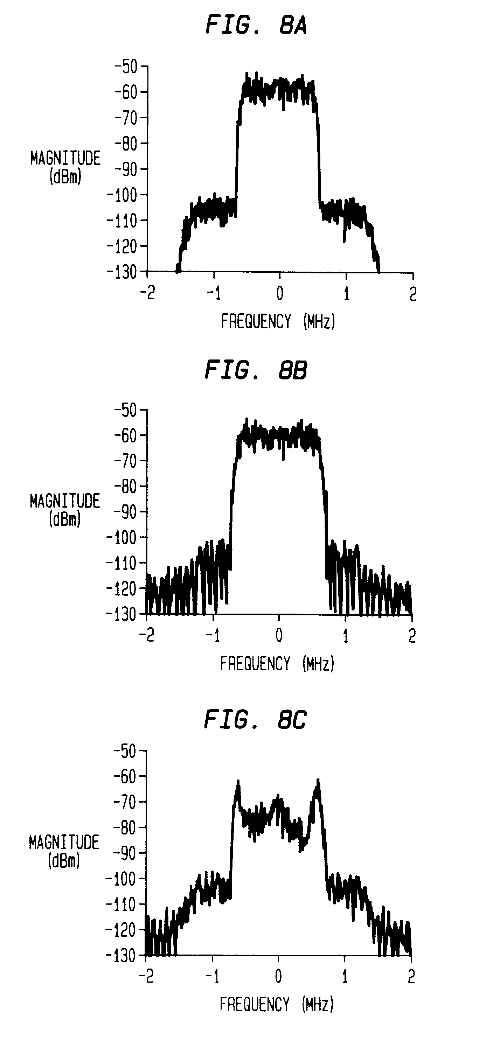

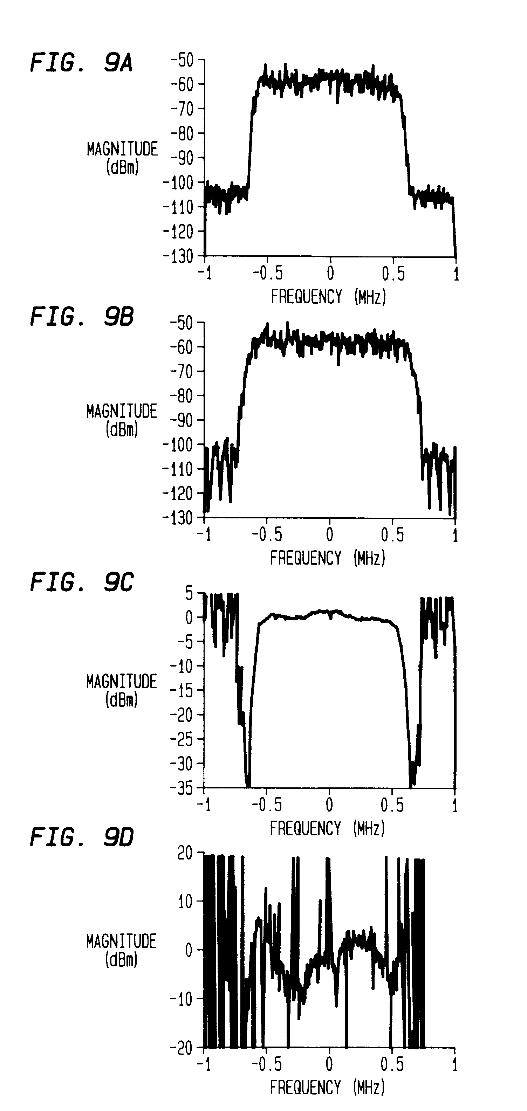

Referring now to FIG. 6, the mode 1 loopback scheme presented in FIG. 5 is illustrated in greater detail as error vector loopback test configuration 500. A base station 505 includes a transceiver 515 which has four differential I,Q outputs 521-524 coupled to four differential inputs 531-534, respectively, and a transmit RF output 540 coupled to a vector signal analyzer 550. A CDMA pilot 570 is coupled to an antenna port 580 of base station 505. Utilizing this configuration, the data presented in FIGs. 7(a)-7(c), 8(a)-8(c) and 9(a)-9(d) were generated. FIGs. 7(a)-7(c) illustrate the measured signal, the reference signal and the error vector in the I,Q plane. The error vector contains distortion due to the transmit and receive paths in base station 505. FIGs. 8(a)-8(c) show the power spectrum of the measured signal, reference signal and the error vector. FIGs. 9(a)-9(b) show the power spectrum of the measured signal and the reference signal and FIGs. 9(c)-9(d) show the magnitude and phase response of the distortion. As can be readily seen, the error vector loopback test provides greater characterization of the RF performance of the transmit and receive paths of a communication system than that afforded by conventional loopback tests.

Numerous modifications and alternative embodiments of the invention will be apparent to those skilled in the art in view of the foregoing description. Accordingly, this description is to be construed as illustrative only and is for the purpose of teaching those skilled in the art the best mode of carrying out the invention. Details of the structure may be varied substantially without departing from the spirit of the invention and the exclusive use of all modifications which come within the scope of the appended claim is reserved.

## Claims

1. A communication system including a transmit path and a receive path, said system comprising:
a loopback structure for coupling the transmit path to the receive path in a loopback configuration. wherein a demodulator is precluded from inclusion in said loopback configuration: and
an error vector processor for analyzing an output of said loopback configuration.

2. A system according to claim 1, wherein said error vector processor is an external test set.

3. Apparatus including a transmit portion and a receive portion, said apparatus comprising:
a loopback structure for coupling the transmit portion to the receive portion in a loopback configuration, wherein a demodulator is excluded from said loopback configuration; and
an error vector analyzer for analyzing an output of said loopback configuration.

4. A system or apparatus according to claim 1 or 3, wherein said loopback structure couples an output of said transmit path or portion to an input of said receive path or portion.

5. A system or apparatus according to claim 1 or 3, wherein said loopback structure couples an output of said receive path or portion to an input of said transmit path or portion.

6. A system or apparatus according to claim 5, wherein said error vector processor is coupled to an output of said transmit path or portion.

7. A system or apparatus according to claim 6, wherein a signal generator is coupled to an input of said receive path or portion.

8. A system or apparatus according to claim 4 or 7 wherein said transmit path or portion includes a RF transmit path and said receive path or portion includes a RF receive path.

9. A system or apparatus according to claim 8, when dependent from claim 4, wherein said error vector processor is coupled to an output of said RF receive path.

10. A system or apparatus according to claim 8, wherein said output of said receive path or portion is an output of said RF receive path and said input of said transmit path or portion is an input of said RF transmit path.

11. A system or apparatus according to claim 8, wherein said transmit path or portion includes an D/A converter coupled to an input of said RF transmit path and said receive path or portion includes a A/D converter coupled to an output of said RF receive path.

12. A system or apparatus according to claim 11, when dependent from claim 4, wherein said error vector processor is coupled to an output of said A/D converter.

13. A system or apparatus according to claim 11, wherein said output of said receive path or portion is an output of said A/D converter and said input of said transmit path or portion is an input of said D/A converter.

14. A system or apparatus according to claim 1 or 3, wherein said error vector analyzer is a built-in test processor.

15. A method for characterizing the RF performance of a transmit path and a receive path in a communications device, said method comprising the steps of:
loopback coupling the transmit path to the receive path in a loopback configuration, wherein a demodulator is precluded from inclusion in said loopback configuration; and
analyzing an output of said loopback configuration with an error vector processor.

16. A method according to claim 15, wherein said step of loopback coupling couples an output of said transmit path to an input of said receive path.

17. A method according to claim 16, wherein said transmit path includes a RF transmit path and said receive path includes a RF receive path and said step of analyzing includes the step of coupling said error vector processor to an output of said RF receive path.

18. A method according to claim 16, wherein said step of loopback coupling includes the steps of:
coupling an D/A converter to an input of a RF transmit path in said transmit path;
coupling an A/D converter to an output of a RF receive path in a receive path; and
said step of analyzing including the step of coupling said error vector processor to an output of said A/D converter.

19. A method according to claim 15, wherein said step of loopback coupling couples an output of said receive path to an input of said transmit path.

20. A method according to claim 19, wherein said step of analyzing includes the step of coupling said error vector processor to an output of said transmit path, said method further including the step of coupling a signal generator to an input of said receive path.

21. A method according to claim 20, wherein said output of said receive path is an output of a RF receive path and said input of said transmit path is an input of a RF transmit path

22. A method according to claim 20, wherein said step of loopback coupling includes the steps of:
coupling an D/A converter to an input of a RF transmit path in said transmit path:
coupling a A/D converter to an output of a RF receive path in said receive path.

23. A method according to claim 22, wherein said output of said receive path is an output of said A/D converter and said input of said transmit path is an input of said D/A converter.
